# EUROPEAN PATENT SPECIFICATION

(11) **EP 1 818 286 B1**
(45) Date of publication and mention of the grant of the patent: **25.04.2012**
(21) Application number: 05811426.5
(22) Date of filing: 01.12.2005
(51) Int. Cl.: B65G 1/137, G06K 17/00

(54) **STORING SYSTEM**
LAGERUNGSSYSTEM
SYSTEME DE STOCKAGE

(30) Priority: 02.12.2004 JP 2004350206
(43) Date of publication of application: 15.08.2007
(73) Proprietor: MURATA KIKAI KABUSHIKI KAISHA, Kyoto 6018326 (JP)
(72) Inventor: ISHIDA, Masato, MURATA SYSTEMS KABUSHIKI KAISHA, Minami-ku, Kyoto-shi, Kyoto 6018326 (JP); MITTA, Yoshinori, MURATA SYSTEMS KABUSHIKI KAISHA, Minami-ku, Kyoto-shi, Kyoto 6018326 (JP)
(74) Representative: Carstens, Dirk Wilhelm
(86) International application number: PCT/JP2005/022071
(87) International publication number: WO 2006/059674

(56) References cited:
- JP-A- 1 242 303
- JP-A- 5 105 204
- JP-A- 10 035 827
- JP-A- 2003 176 004
- JP-A- 2003 176 004
- US-A1- 2002 038 267
- US-A1- 2003 222 001

## Description

### Technical Field

The present invention relates to a storage system including warehouses such as automatic warehouses or floor warehouses. Further, the present invention relates to an autotomatic warehouse according to the preamble of claim 1.

### Background Art

Storage systems where articles in storage are managed based on RFID tags attached to the articles are known. For example, when an incoming shipment of articles arrives, by reading data of the RFID tags, it is possible to automatically obtain data of the incoming articles (Patent Publication 1). However, even in this approach, it is not possible to manage locations of individual articles in the storage system. By simply reading data of the ID tags of the incoming articles, though it is possible to confirm whether the articles are stored somewhere in the storage system, it is not possible to track specific positions of the articles.

Patent Publication 1: Japanese Laid-Open Patent Publication No. 2002-104632 From prior art document JP 2003 176004 A a warehouse control device is known which forms a stock record to relate the loaded article to a pallet loading the article when receiving loading information. Thereafter, the warehouse control device decides a position to store the pallet loading the article and transmits pallet storage instruction information to carry out storage instruction of the pallet. The warehouse control device changes pallet state information on a pallet record shown in carriage starting information to a pallet carriage state when it receives the carriage starting information and changes it to a pallet storage state when it receives arrival information.

An automatic warehouse according to the preamble of claim 1 is disclosed in US 2002 038267 A.

### Disclosure of the Invention

### Problems to be solved by the Invention

An object of the present invention is to make it is possible to track locations of individual articles in a storage system.

Another object of the present invention is to make it possible to manage positions of individual articles in an automatic warehouse.

Still another object of the present invention is to make it possible to easily check articles stored in a warehouse.

Still another object of the present invention is to make it possible to easily perform stock taking of articles

### Means for Solving the Problems

These objects are solved by an automatic warehouse storing articles with ID tags on a carrier, the automatic warehouse having the features as set forth in claim 1. Preferred embodiments of the automatic warehouse are stated in the subclaims 2 to 3.

According to the present invention, in an automatic warehouse for storing an article to which an ID tag is attached, on a carrier, an ID tag is attached to the carrier. The automatic warehouse comprises means for reading data from the ID tag of the article at the time of storing the article in a warehouse, means for reading data from the ID tag of the carrier at the time of storing the article in the warehouse, and memory means for associating an ID of the carrier with an ID of the article, and storing the ID of the article, at the time of storing the article in the warehouse.

In a storage system for storing an article to which an ID tag is attached, on a carrier, an ID tag is attached to the carrier. The storage system comprises means for reading data from the ID tag of the article at the time of receiving an incoming shipment for the article, means for reading data from the ID tag of the carrier at the time of receiving the incoming shipment, and memory means for associating an ID of the carrier with an ID of the article, and storing the ID of the article, at the time of receiving the incoming shipment.

The process of associating of the ID of the carrier with the ID of the article, and storing the ID of the article herein means a process of storing data in a manner that it becomes possible to determine the ID of the article from the ID of the carrier, or it becomes possible to determine the ID of the carrier from the ID of the article.

In the specification, the description regarding the storage system is directly applicable to the automatic warehouse, and the description regarding the automatic warehouse is directly applicable to the storage system.

The automatic warehouse system is not limited to combination of racks, stations, and transportation means such as stacker cranes. For example, the automatic warehouse may adopt a system where a plurality of racks which can be lowered/elevated are used in combination so that the articles placed on the carrier in each of the racks can be stored in, or retrieved from the warehouse.

The ID of the carrier and the ID of the article may be associated by storing the ID of the article or partially storing data of the article in the ID tag of the carrier itself. However, in this case, the storage capacity of the ID tag needs to be large. Therefore, preferably, the memory means is a control processing unit, and the control processing unit comprises means for storing externally inputted information about storage of the article in the warehouse, and means for comparing data read from the ID tag of the article at the time of storing the article in the warehouse with the externally inputted information about storage of the article in the warehouses.

Further, preferably, transportation means in the automatic warehouse has means for reading data from an ID tag of a bucket, and the transportation means moves around in the automatic warehouse to read data from the ID tag of the bucket in storage for performing stock taking.

### Advantages of the Invention

In the automatic warehouse and the storage system, respectively, of the present invention, since the ID of the article associated with the ID of the carrier is stored, it is possible to reliably manage the correspondence between the article and the carrier storing the article.

Further, by storing externally inputted information about storage of the articles in the warehouse, and comparing data read from the ID tags of the articles at the time of storing the articles in the warehouse with the externally inputted information about storage of the articles in the warehouse, it is possible to compare the information about storage of the articles in the warehouse and the actual articles stored in the warehouse utilizing data read from the ID tags at the time of storing the articles.

### Brief Description of the Drawings

### [FIG. 1]

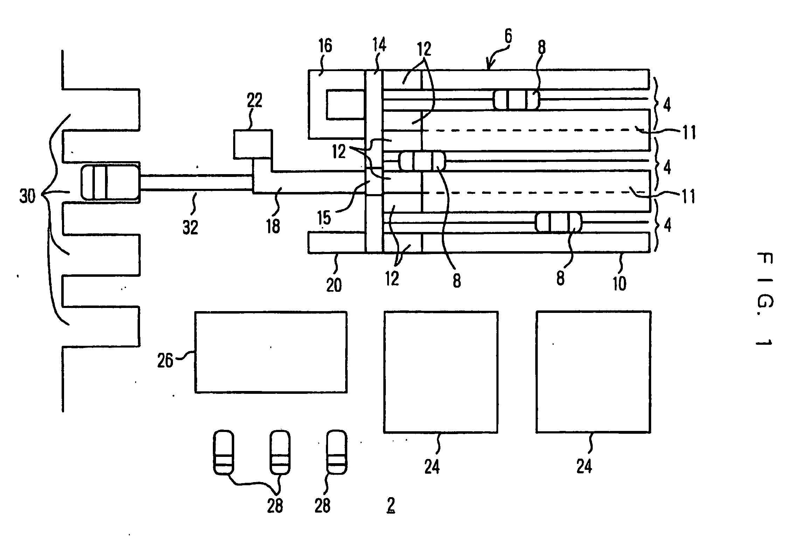

FIG. 1 is a plan view schematically showing a layout of a storage system according to an embodiment.

### [FIG. 2]

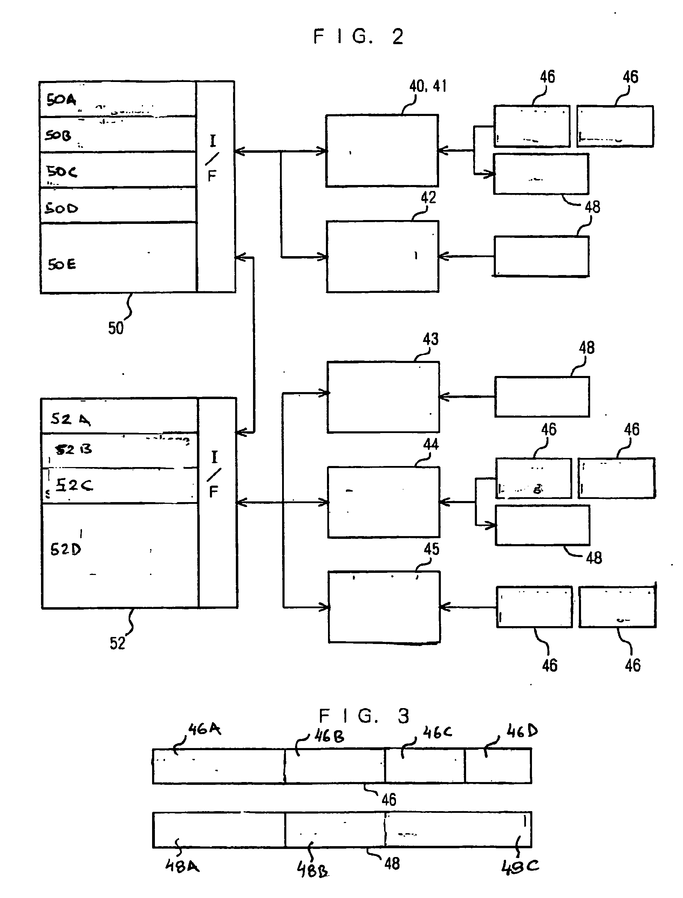

FIG. 2 is a diagram showing positions of ID readers in the storage system according to the embodiment.

### [FIG. 3]

FIG. 3 is a diagram showing data structure of RFID tags according to the embodiment.

### [FIG. 4]

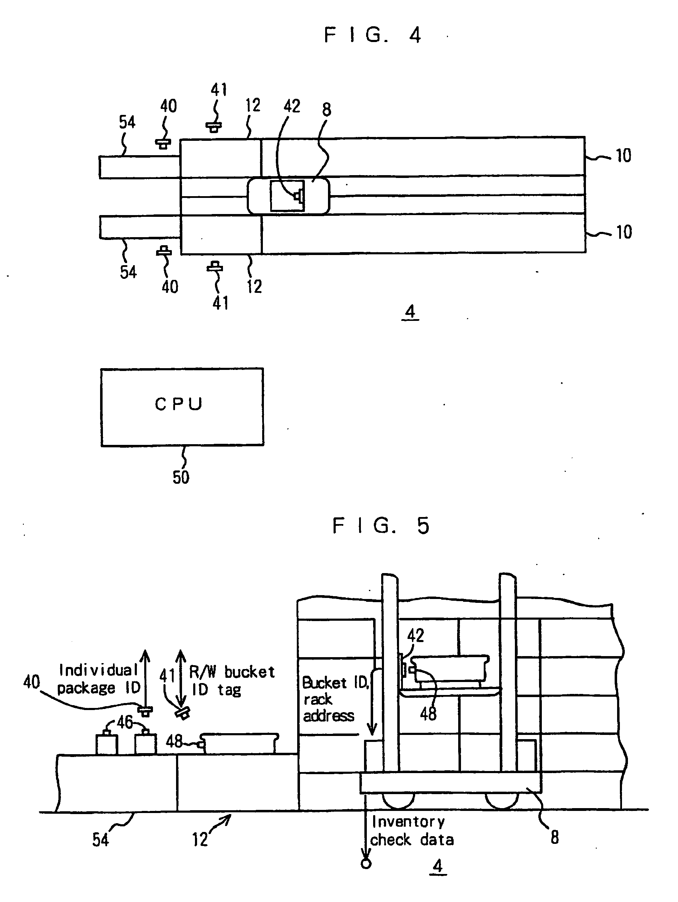

FIG. 4 is a view showing a layout according an embodiment including an automatic warehouse only.

### [FIG. 5]

FIG. 5 is a view schematically showing positions of the RFID readers in a station and a stacker crane according to the embodiment.

### [FIG. 6]

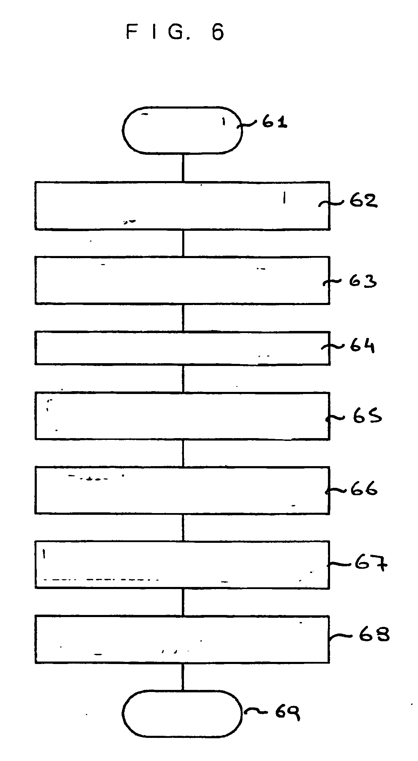

FIG. 6 is a flow chart showing a data processing algorithm at the time of storing articles in the warehouse according to the embodiment.

### [FIG. 7]

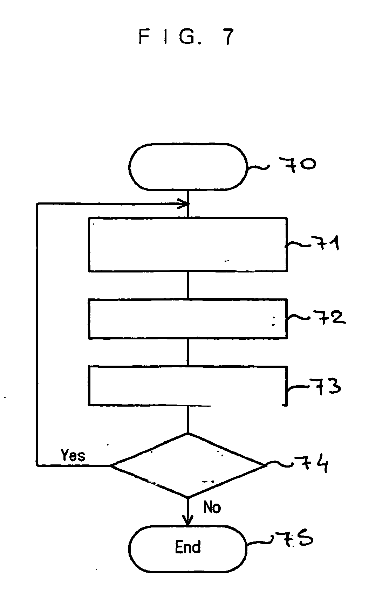

FIG. 7 is a flow chart showing a data processing algorithm at the time of performing stock taking according to the embodiment.

### [FIG. 8]

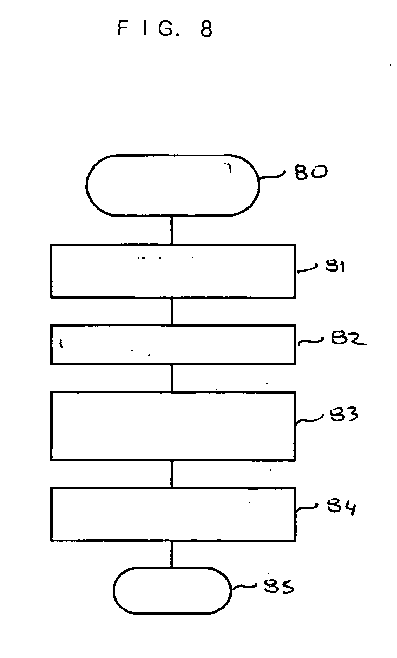

FIG. 8 is a flow chart showing a data processing algorithm at the time of retrieving articles from the warehouse by picking according to the embodiment.

### Description of the numerals

2: storage system
4: automatic warehouse
6: automatic warehouse system
8: stacker crane
10, 11: rack
12: station
14: rail vehicle system
15: rail vehicle
16 to 20: conveyor
22: bucket magazine
24: floor warehouse
26: processing area
28: forklift
30: truck berth
32: conveyor
40 to 45: RFID reader
46: ID tag of individual package
48: ID tag of bucket
50: CPU of automatic warehouse
52: CPU of storage system
54: sub-conveyor

### Best Mode for Carrying Out the Invention

Hereinafter, an embodiment in the most preferred form for carrying out the present invention will be described.

### EMBODIMENT

FIGS. 1 to 8 shows the embodiment. In the drawings, a reference numeral 2 denotes a storage system, and reference numerals 4 denote automatic warehouses. The automatic warehouses 4 are arranged in parallel to form an automatic warehouse system 6. In the automatic warehouse 4, stacker cranes 8 as an example of transportation means in the warehouse are provided for transporting articles between racks 10, 11, and stations for storage and retrievals of the articles. A rail vehicle system 14 is provided for the automatic warehouse system 6. A rail vehicle 15 travels between conveyors 16 to 20 and the stations 12 for transporting articles. For example the conveyor 16 is a conveyor for picking. The conveyor 16 picks articles from the bucket stored in the warehouse. After picking, the bucket is stored in the warehouse again. The conveyor 18 is a conveyor for transporting articles of incoming shipments and outgoing shipments. The conveyor 18 transports articles to/from the incoming/outgoing shipment stations such as truck berths 30. A reference numeral 22 denotes a bucket magazine. The conveyor 20 is a conveyor used by forklifts. It should be noted that the rail vehicle system 14 and the conveyors 16 to 20 may not be provided.

Reference numerals 24 denote floor warehouses. In the floor warehouses 24, no transportation apparatus or stations are provided. A reference numeral 26 denotes a processing area where articles to be transferred to the buckets are placed, and articles are picked from the buckets. Reference numerals 28 denote forklifts, reference numerals 30 denote truck berths, and a reference numeral 32 denotes a conveyor connecting the truck and the conveyor 18.

FIG. 2 shows positions of RFID readers 40 to 45. In the embodiment, RFID tags are used as ID tags. Individual articles to which the ID tags are attached are referred to as individual packages. Further, ID tags are also attached to the buckets. Instead of the buckets, ID tags may be attached to other carriers such as pallets or trays. In the specification, the ID reader may be an ID reader/writer. Reference numerals 50 and 52 denote CPUs (control processing units) of the automatic warehouse and the storage system. The CPU 52 of the storage system assigns management of the articles in the automatic warehouse system 6 to the CPU 50 of the automatic warehouse.

The RFID readers 40, 41 for the storage/retrieval station are provided in the stations 12 or the conveyors 16 to 20. The RFID reader 40 is an ID reader for reading data from ID tags 46 of the individual packages. The RFID reader 41 is an ID reader/writer for reading data in, and writing data from an ID tag 48 of the bucket. The RFID reader 42 provided in the elevation frame of the stacker crane reads data from the ID tag 48 of the bucket which is being transported by the stacker crane.

The RFID reader 43 provided in the forklift reads data from ID tag 48 of the bucket which is being transported by the forklift. The RFID reader 44 in the processing area reads data from ID tags 46 of the individual packages which are picked or packed in this area, and read data from, and write data in an ID tag 48 of the target bucket which is handled. The RFID reader 45 in the incoming/outgoing shipment station, e.g., around the truck berths reads data from ID tags 46 of the individual packages of an incoming shipment or an outgoing shipment.

The CPU 50 of the automatic warehouse has a database, and, for example, performs management of the racks 50A, management of the bucket 50B, management of the individual packages 50C, management of storage of articles in and retrieval of articles from the warehouse 50D, and management of the entire inventory 50E of the other articles. In the rack management, empty racks and racks occupied by buckets are managed, e.g., in the units of racks addresses. In the bucket management, with respect to the ID of each bucket, the location (e.g., rack address) of the rack and the IDs of articles in the bucket are managed. Therefore, based on the ID of the bucket, a list of IDs of articles in the bucket can be obtained. In one arrangement where a fixed rack address is assigned to the ID tag of the bucket, one rack address is available to one bucket only. In another arrangement where the rack address of the bucket is a variable which can be changed each time the articles are stored in the warehouse, the number of buckets can be larger than the number of the rack addresses. The locations of the buckets are not limited to the rack addresses. The buckets may be located in other positions in the storage system, e.g., in a floor station, and by making it possible to write data of locations in the ID tags, it is possible to easily manage the positions of the buckets in the storage system.

In the storage/retrieval management, storage information regarding storage of articles in the automatic warehouse system and retrieval information regarding retrieval of articles from the automatic warehouse system, and the checking (comparison) results with the articles stored in, and retrieved from the warehouse at the station 12 is stored. The storage information or the retrieval information herein means reservation information before retrieval or storage. In the entire inventory management, other data such as inventory data of the articles in the entire automatic warehouse system is stored.

The CPU 52 of the storage system performs management of the racks, management of the buckets 52A, management of the individual package 52B, management of storage of articles of the incoming shipment and the outgoing shipment 52C, and management of the entire inventory 52D. An interface is provided for the CPU 52 for communication with the RFID readers 43 to 45, and the CPU 50 of the automatic warehouse. Further, the CPU 52 communicates with CPUs or terminals outside the storage system 2 through the interface. The CPU 52 of the storage system assigns the management of the buckets and articles stored in the automatic warehouse system 6 to the CPU 50 of the automatic warehouse. The CPU 52 of the storage system manages buckets outside the automatic warehouse, and manages articles outside the automatic warehouse. In the bucket management, for example, positions of the buckets, IDs of the buckets, and a list of IDs articles placed in the bucket are stored. For example, when a bucket in the automatic warehouse is retrieved from the automatic warehouse, and stored in the floor warehouse, the location of the bucket is updated from a rack address in the automatic warehouse to a rack address in the floor warehouse. In the individual package management, for example, a list of individual packages is stored. In the incoming/outgoing shipment management, incoming shipment information and outgoing shipment information, and checking (comparison) results at the time of processing the incoming shipment and the outgoing shipment are stored. In the entire inventory management, other data, in particular, the inventory of the articles stored in the automatic warehouse system 6 is managed collectively. It should be noted that the process handled by the CPU 50 of the automatic warehouse and the process handled by the CPU 52 of the storage system may be handled by a single CPU.

FIG. 3 shows data of the ID tag 46 of the individual package and data of the ID tag 48 of the bucket. The ID tag 46 of the individual package stores data 46D such as a manufacturer code 46A, a name of an agricultural cooperative, an origin of a sample, a model number 46B, a model type, a shipment date, and a collection date as well as a unique ID 46C assigned to each individual package. In the case where any other data is provided, data such as a best before date, a price, a shipment destination, cautions in handling the article are stored. The ID tag 48 of the bucket stores a bucket ID as a bucket number 48A. Further, the ID tag 48 stores a storage position such as a rack address 48B or a storage address in the floor warehouse, and a list of individual packages 48C placed in the bucket. The list of individual packages may be maker codes, model numbers, and the number of each model. Alternatively, the list of individual packages may be a list of unique IDs of the ID tags of the individual packages. It is at least necessary to make sure that the same IDs are not used for both of the ID tags 46 of the individual packages and the ID tags 48 of the buckets.

The embodiment has been described in connection with the example of the storage system 2. Alternatively, the embodiment can be carried out in the form of a single automatic warehouse 4. FIG. 4 shows an example of this case. For example, sub-conveyors 54 are connected to the stations 12. RFID readers 40 read data from ID tags of articles stored in the warehouse or ID tags of articles retrieved from the warehouse. RFID readers 41 read data of ID tag of buckets, and overwrite the data of the ID tag of each bucket using the data of, e.g., a new storage position (rack address) or a list of IDs of the individual packages placed in the bucket. The read data of the ID tags of the individual packages and the data of the ID tags of the buckets after overwriting are managed by the CPU 50 of the automatic warehouse. At this time, the ID of the bucket is associated with the IDs of the individual packages. Further, an RFID reader 42 provided at the elevation frame of the stacker crane 8 reads data of the ID tags of the buckets. Structure of the automatic warehouse 4 is equal to structure where the storage system 2 according to the embodiment is considered to be made up of only one automatic warehouse. The description about the storage system 2 is directly applicable to the automatic warehouse 4 by replacing the articles of the incoming shipment as the articles for storage in the warehouse, the incoming shipment information with the storage information, the articles of the outgoing shipment with the articles for retrieval from the warehouse, and the outgoing shipment information with the retrieval information.

FIG. 5 shows operation of reading ID tags at the time of storing articles in, and retrieving articles from the automatic warehouse 4. A reference numeral 54 denotes a sub-conveyor connected to the station 12. The RFID reader 40 reads data from the ID tags 46 of the individual packages. The RFID reader 41 reads data from the ID tag 48 of the bucket, and writes data such as a list of articles to be placed in the bucket, and a rack address for storage of the bucket, in the ID tag 48 of the bucket. These items of data are sent to the CPU 50 of the automatic warehouse, and at the time of storing the data, the ID of the bucket and the IDs of the individual packages are associated with each other. Thus, based on the IDs of the individual packages, it is possible to determine the ID of the bucket containing the individual packages.

After the stacker crane 8 transfers the bucket, the ID tag 48 is read by the RFID reader 42 to determine the rack address as a storage destination, and the bucket is stored at the rack address. At the time of performing stock taking, the stacker crane 8 moves around along the rack. The stacker crane 8 reads a bucket number and a list of individual packages in the bucket from the ID tag of each bucket to perform the inventory check.

FIG. 6 shows processes at the time of storing articles in the automatic warehouse 4 storage in warehouse 61. The algorithm of FIG. 6 is applicable to processes at the time of receiving articles of an incoming shipment in the storage system by replacing storage of articles in the warehouse with the incoming shipment, and replacing the rack address with the storage position in the storage system. In step 62 the sub-conveyor 54 reads data from the ID tags of the individual packages, and the read data is sent to the CPU 50. The CPU 50 compares in step 63 the received data with data of articles scheduled to be stored in the warehouse. As a result, it is possible to inspect the articles stored in the warehouse easily. At the same time in step 64, data is read from the ID tag of the bucket, and the CPU 50 in step 65 stores the data while associating the IDs of the individual packages with the ID of the bucket. Then in step 66, the rack address for storing the bucket is determined, and the data is stored in the CPU so that the locations of the individual packages can be managed in the units of buckets. The data of the individual packages, and the rack address are written in the ID tag of the bucket in next step 67. Then, the bucket is transferred to the stacker crane. In step 68 the RFID reader at the elevation frame reads data of the rack address from the ID tag of the bucket, and the bucket is stored at the rack address. The process end, at step 69. As a result, at the time of storage in the warehouse, it is not necessary to send data of the rack address for storage from the CPU 50 to the stacker crane 8.

FIG. 7 shows an algorithm of processes at the time of performing stock taking, or invention check 70. The algorithm is applicable to the entire storage system, by replacing the crane with transportation means in the storage system, and replacing the rack of the automatic warehouse with the storage position including the floor warehouse. The stacker crane moves around in the rack of the automatic warehouse in step 71 to read the ID tag of the bucket in step 72 at each rack address, and read a list of the individual packages stored in the bucket. The list is compared with data of the CPU in step 73. After data is read from the ID tag of the bucket at every rack address with loop 74, the inventory check is completed at end 75. Therefore, the inventory check is performed easily.

FIG. 8 shows an algorithm of processes of retrieving articles from the warehouse by picking 80. These process are directly applicable to the processes in the processing area 26 in FIG. 1. The bucket is retrieved to the conveyor for picking or the like. The individual packages are picked, and data is read from the ID tags of the picked individual packages in first step 81. The read data is compared with data for retrieval from the warehouse for inspecting the articles at the time of retrieving articles from the warehouse in next step 82. Then in step 83, the data of the ID tag of the bucket is overwritten such that data of the individual packages picked from the bucket is eliminated. The data of the CPU is updated, and in next step 84 the bucket is stored in the warehouse again. The process ends 85.

In the embodiment, the bucket is used as the carrier. Alternatively, a pallet or a tray may be used as the carrier. Further, in the embodiment, data of the individual packages is written in the ID tag of the bucket. In the case where the storage capacity of the ID tag is not sufficient, the bucket and the individual packages are only associated by the CPUs 50 and 52. In this case, in the inventory check by reading data from the ID tag of the bucket, it is sufficient to actually confirm the ID of the bucket, and the individual packages are not confirmed actually.

## Claims

1. An automatic warehouse (4) storing articles with ID tags on a carrier
wherein
said carrier is provided with an RFID tag (48);
a transportation apparatus (54, 12) for storage of the automatic warehouse (4) is provided with means (40) for reading data in the ID tags (46) of the articles and means (41) for reading and writing data in the RFID tag (48) of the carrier, so that the data read from the ID tags (46) of the articles is written in the RFID tag (48) of the carrier; and
a memory means provided in a control processing unit (50) of the automatic warehouse (4) stores ID data of the articles in such a way that the data read from the ID tags (46) of the articles is associated with the RFID (48) of the carrier;
**characterized in that**
the transportation apparatus (54, 12) for storage comprising a storage station (12) and a conveyor (54) connected to the station (12);
said means (40) for reading data in the ID tags (46) of the articles is provided in the vicinity of the conveyor (54);
said means (41) for reading and writing data in the RFID tag (48) of the carrier is provided for said storage station (12);
both when storing articles in the automatic warehouse (4) and when picking articles from the warehouse (4), ID data in the ID tags (46) or the articles are read by the means (40);
the ID data read by the means (40) for reading data in the ID tags (46) is written in the RFID tag (48) of the carrier by the means (41) for reading and writing data in the RFID tag (48); and
the ID data read by the means (40) for reading data in the ID tags (46) is also stored in the memory in the control processing unit (50).

2. The automatic warehouse (4) of claim 1. **characterized in that** the control processing unit (50) is provided with means for storing storage information of the articles inputted from an outside data source and means for comparing the data read from the ID tags (46) of the articles when being stored and said storage information for inspection.

3. The automatic warehouse (4) of claim 1, **characterized in that** said carrier is a bucket with said RFID tag (48) and that a transportation apparatus (8) for transporting said bucket in the automatic warehouse (4) is provided with means (42) for reading data in said RFID tag (48) of the bucket and that stock taking of the automatic warehouse (4) is performed with reading data in said RFID tag (48) of the bucket, while making said transportation apparatus (8) for transporting said bucket in the automatic apparatus travelling in the automatic warehouse (4).

## Patentansprüche

1. Automatisches Warenhaus (4), das Artikel mit ID-Tags auf einem Träger speichert, wobei
der Träger mit einem RFID-Tag (48) versehen ist;
eine Transportvorrichtung (54, 12) zum Speichern des automatischen Warenhauses (4) mit Einrichtungen (40) zum Einlesen von Daten in die ID-Tags (46) der Artikel, sowie mit Einrichtungen (41) zum Lesen und Schreiben von Daten in den RFID-Tag (48) des Trägers versehen ist, so dass die Daten, die aus den ID-Tags (46) der Artikel ausgelesen werden, in den RFID-Tag (48) des Trägers geschrieben werden; und
eine Speichereinrichtung, die in einer Prozesssteuereinheit (50) des automatischen Warenhauses (4) vorgesehen ist, ID-Daten der Artikel in der Weise speichert, dass die von den ID-Tags (46) der Artikel ausgelesenen Daten dem RFID-Tag (48) des Trägers zugeordnet sind;
**dadurch gekennzeichnet, dass**
die Transportvorrichtung (54, 12) zum Speichern eine Speicherstation (12) und ein mit der Speicherstation (12) verbundenes Fördermittel (54) aufweist;
die Einrichtungen (40) zum Einlesen der Daten in die ID-Tags (46) der Artikel in der Nähe des Fördermittels (54) vorgesehen sind;
die Einrichtungen (41), zum Lesen und Schreiben der Daten in die oder aus den RFID-Tags (48) des Trägers für die Speicherstation (12) vorgesehen ist; sowohl wenn Artikel in dem automatischen Warenhaus (4) gespeichert werden als auch wenn Artikel vom Warenhaus (4) genommen werden, die ID-Daten in den ID-Tags (46) oder die Artikel von den Einrichtungen (40) gelesen werden;
die von der den Einrichtungen (40) gelesenen ID-Daten zum Lesen der Daten in den ID-Tags (46) in den RFID-Tag (48) des Trägers durch die Einrichtungen (41) zum Lesen und Schreiben von Daten in den RFID-Tag (48) geschrieben werden; und
die ID-Daten von den Einrichtungen (40) zum Lesen von Daten in die ID-Tags (46) auch im Speicher in der Prozesssteuereinheit (50) gespeichert werden.

2. Automatisches Warenhaus (4) nach Anspruch 1, **dadurch gekennzeichnet, dass** die Prozesssteuereinheit (50) mit Einrichtungen zum Speichern von Speicherinformation der Artikel, die von einer äußeren Datenquelle eingegeben werden, und mit Einrichtungen zum Vergleichen der Daten, die von den ID-Tags (46) der Artikel, wenn sie gespeichert werden, gelesen werden, mit der Speicherinformation zur Inspektion.

3. Automatisches Warenhaus (4) nach Anspruch 1, **dadurch gekennzeichnet, dass** der Träger ein Behälter mit dem RFID-Tag (48) ist, und dass eine Transporteinrichtung (8) zum Transportieren des Behälters im automatischen Warenhaus (4) mit Einrichtungen (42) zum Lesen von Daten in den RFID-Tag (48) des Behälters versehen ist, und dass der Warenbestand, der aus dem automatischen Warenhaus (4) genommen wird, mit den Lesedaten im RFID-Tag (48) des Behälters ausgeführt wird, während die Transporteinrichtung (8) zum Transport des Behälters in der automatischen Einrichtung gemacht wird, die im automatischen Warenhaus (4) läuft.

## Revendications

1. Magasin automatique (4) stockant des objets munis d'étiquettes d'identification sur un porte-objet, dans lequel :
le porte-objet est muni d'une étiquette RFID (48) ;
un dispositif de transport (54, 12) destiné au rangement du magasin automatique (4) est muni de moyens (40) de lecture de données dans les étiquettes d'identification (46) des objets et de moyens (41) pour lire et écrire des données dans l'étiquette RFID (48) du porte-objet, de sorte que les données lues dans les étiquettes d'identification (46) des objets sont écrites dans l'étiquette RFID (48) du porte-objet ; et
des moyens de mémorisation prévus dans une unité de traitement de commande (50) du magasin automatique (4) mémorisent des données d'identification des objets de telle sorte que les données lues dans les étiquettes d'identification (46) des objets sont associées à l'étiquette RFID (48) du porte-objet ;
**caractérisé en ce que**
le dispositif de transport (54, 12) pour le rangement comprend une station de rangement (12) et un transporteur roulant (54) connecté à la station (12) ;
les moyens (40) de lecture de données dans les étiquettes d'identification (46) des objets sont prévus à proximité du transporteur roulant (54) ;
les moyens (41) pour lire et écrire des données dans l'étiquette RFID (48) du porte-objet sont prévus pour la station de rangement (12) ;
à la fois lors du stockage d'objets dans le magasin automatique (4) et lors du retrait d'objets du magasin (4), des données d'identification se trouvant dans les étiquettes d'identification (46) des objets sont lues par lesdits moyens (40) ;
les données d'identification lues par les moyens (40) de lecture de données dans les étiquettes d'identification (46) sont écrites dans l'étiquette RFID (48) du porte-objet par les moyens (41) ; et
les données d'identification lues par les moyens (40) de lecture de données dans les étiquettes d'identification (46) sont aussi mémorisées dans la mémoire se trouvant dans l'unité de traitement de commande (50).

2. Magasin automatique (4) selon la revendication 1, **caractérisé en ce que** l'unité de traitement de commande (50) est munie de moyens destinés à mémoriser des informations de stockage des objets, introduites à partir d'une source extérieure de données, et de moyens pour comparer les données lues dans les étiquettes d'identification (46) des objets lorsqu'ils sont stockés, avec les informations de stockage pour inspection.

3. Magasin automatique (4) selon la revendication 1, **caractérisé en ce que** le porte-objet est un godet muni de l'étiquette RFID (48) et qu'un dispositif de transport (8) destiné à transporter ledit godet dans le magasin automatique (4) est muni de moyens (42) pour lire des données dans l'étiquette RFID (48) du godet et qu'un prélèvement de stock du magasin automatique (4) est réalisé en lisant des données dans l'étiquette RFID (48) du godet, pendant qu'on fait se déplacer le dispositif de transport (8), pour transporter le godet dans le dispositif automatique, dans le magasin automatique (4).
